# EUROPEAN PATENT SPECIFICATION

(11) **EP 1 511 290 B1**
(45) Date of publication and mention of the grant of the patent: **26.07.2006**
(21) Application number: 04255164.8
(22) Date of filing: 26.08.2004
(51) Int. Cl.: H04N 1/21, H04N 5/335

(54) **Solid-state image sensing apparatus**
Festkörperbildaufnahmevorrichtung
Dispositif de prise de vues à l'état solide

(30) Priority: 26.08.2003 JP 2003301962
(43) Date of publication of application: 02.03.2005
(73) Proprietor: SHARP KABUSHIKI KAISHA, Osaka-shi, Osaka 545-8522 (JP)
(72) Inventor: Iwai, Yoshio, Yamatokoriyama-shi, Nara 639-1103 (JP); Kimura, Katsuji, Yao-shi, Osaka 581-0831 (JP); Yoshida, Takuji, Tenri-shi, Nara 632-0004 (JP)
(74) Representative: Brown, Kenneth Richard

(56) References cited:
- US-A1- 2002 054 229
- PATENT ABSTRACTS OF JAPAN vol. 2003, no. 10, 8 October 2003 (2003-10-08) & JP 2003 174593 A (MATSUSHITA ELECTRIC IND CO LTD), 20 June 2003 (2003-06-20)
- PATENT ABSTRACTS OF JAPAN vol. 1996, no. 11, 29 November 1996 (1996-11-29) & JP 08 172569 A (RICOH CO LTD), 2 July 1996 (1996-07-02)

## Description

### BACKGROUND OF THE INVENTION

### 1. FIELD OF THE INVENTION:

The present invention relates to a solid-state image sensing apparatus which is used for an electronic camera, such as, video camera, electronic still camera, and camera for a mobile phone, and processes an image signal output from a solid-state image sensing device.

### 2. DESCRIPTION OF THE RELATED ART:

Recently, a solid-state image sensing apparatus using the solid-state image sensing device has been widely used for applications as an electronic camera, such as, video camera, electronic still camera, and camera for a mobile phone. It is desired to enhance the image quality of an image captured by such a solid-state image sensing apparatus. In order to achieve this, a solid-state image sensing apparatus is controlled such that a noise generated when a predetermined signal process is performed on an image signal obtained from the solid-state image sensing device, and when the image signal is transmitted for input/output.

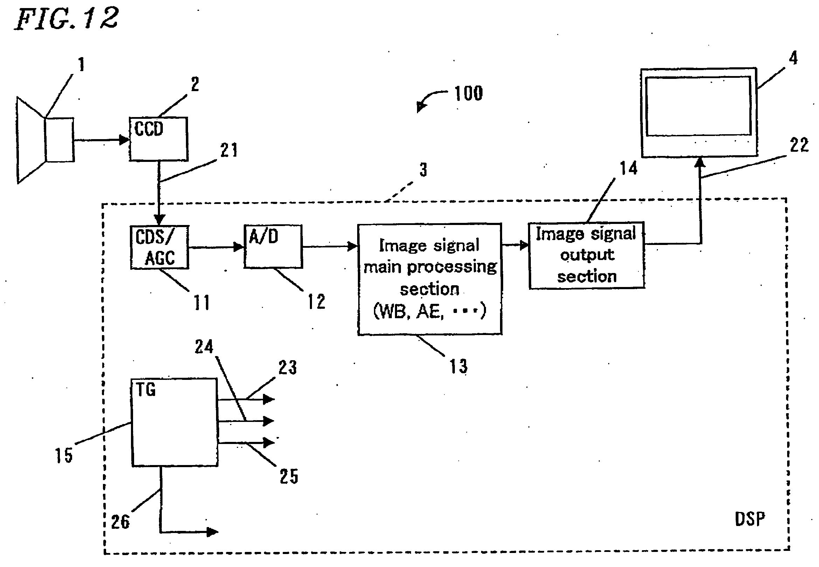

Figure 12 is a block diagram showing the structure of a conventional solid-state image sensing apparatus.

In Figure 12, a solid-state image sensing apparatus 100 includes: an optical lens 1; a CCD 2, which is an example of the solid-state image sensing device; a digital signal processing section 3(hereinafter, referred to as DSP 3); and a display section 4. Herein, an image signal output from the CCD 2 is referred to as a CCD outputs signal 21, and an image signal output from the DSP is referred to as a DSP output signal 22.

With such a structure, an image of a subject is formed on a light receiving section of the solid-state image sensing device by the optical lens 1. The light which has reached the light receiving section of the solid-state image sensing device is subjected to photoelectric conversion by the CCD 2 and becomes an analog electric signal (hereinafter, referred to as an image signal). Then, the image signal is transmitted as a CCD output signal 21 to the DSP 3. After the image signal is subjected to various signal processing in the DSP 3, the image signal is transmitted to the display section 4 as the DSP output signal 22 suitable for the display section 4.

Hereinafter, the internal structure of the DSP 3 is further described in more detail.

The DSP 3 includes: an image signal pre-processing section 11; an analog-to-digital (A/D) conversion section 12; an image signal main processing section 13; an image signal output section 14; and a timing signal generator 15 (hereinafter, referred to as TG 15).

In the image signal pre-processing section 11, with respect to the image signal, reduction of a noise by correlated double sampling process (hereinafter, referred to as CDS), and an amplification control by auto gain control (hereinafter, referred to as AGC) are performed.

In the A/D 12, the image signal which is an analog signal is converted to a digital signal. Then, the image signal is transmitted to the image signal main processing section 13.

In the image signal main processing section 13, the image signal which is converted into a digital signal is subjected to various digital signal image processing such as white balance control (hereinafter, referred to as WB), automatic exposure control (hereinafter, referred to as AE), and gamma correction. Then, the image signal is transmitted to the image signal output section 14.

The image signal output section 14 converts the image signal which has been subjected to the digital signal image processing into a signal which is compatible with the display section 4, and outputs to the display section 4 with various timing signals required for displaying the output image such as a vertical synchronizing signal and a horizontal synchronizing signal generated in the TG 15.

Examples of a timing signal output from the TG 15 include a timing pulse 23, a vertical synchronizing signal (hereinafter, referred to as VD) 24, a horizontal synchronizing signal (hereinafter, referred to as HD) 25, and a clock pulse 26. Each of the timing signals is used as a synchronizing signal in associated processing section.

Japanese Laid-open Patent Publication No. 9-233393 discloses an example of such a conventional solid-state image sensing apparatus 100. In the disclosed apparatus, a timing signal is generated during a blanking interval (horizontal blanking interval), which is an interval other than a video interval in the solid-state image sensing device. This is technique to perform operation of a frequency dividing circuit provided in the TG 15 within a blanking interval. The technique enables to obtain a high-quality video signal without the frequency dividing noise signal generated in the TG 15 overlapping a video signal (image signal).

However, the above-mentioned conventional solid-state image sensing apparatus 100 suffers from the problem that an image quality is deteriorated because an image signal is affected by a noise generated by transmitting the image signal.

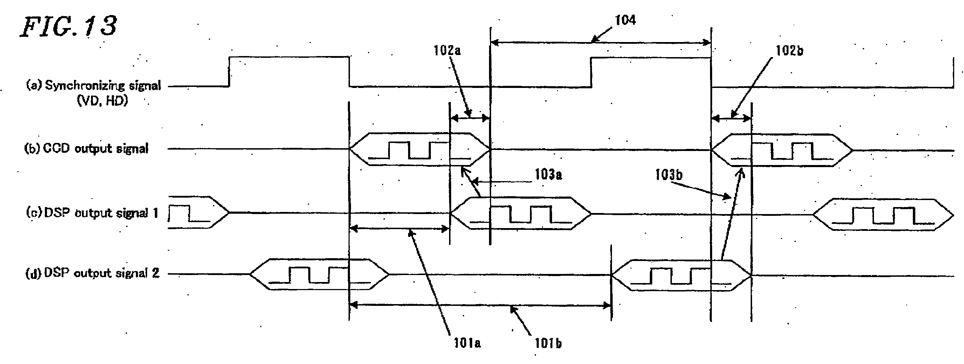

Hereinafter, such a problem will described with reference to a case where a CCD output signal as indicated by (b) in Figure 13 is obtained from the CCD 2 with respect to a synchronizing signal(vertical synchronizing signal VD, horizontal synchronizing signal HD) of a CCD output signal as indicated by (a) in Figure 13, the CCD output signal is subjected to a signal processing in the DSP 3, and thus DSP output signals 1 and 2 as indicated by (c) and (d) in Figure 13 are obtained.

In Figure 13, an interval 104 indicates a blanking interval, i.e., a period other than a video interval in the solid-state image sensing device (CCD2) (herein, both a horizontal synchronizing signal feedback time (horizontal blanking interval) and a vertical synchronizing signal feedback time (vertical blanking interval) are included).

In Figure 13, (c) and (d) indicate signals having different output start position from the DSP 3 in view of processing speeds in the DSP 3. With respect (c) and (d) in Figure 13, intervals 101a and 101b respectively indicate time before start of the signal processing in the DSP.

Herein, as shown by intervals 102a and 102b in Figure 13, if an image data portion of the CCD output signal and an image data portion of the DSP output signal are partially overlapping each other when they are output, they affect each other through a ground on a circuit due to a circuit substrate property. Accordingly, as indicated by arrows 103a and 103b of Figure 13, the image signal is affected by the DSP output signal and a noise is generated. Due to an influence of such a noise, there is a problem that image quality is deteriorated.

In the conventional technique described in Japanese Laid-Open Patent Publication No. 9-233393, a timing signal is generated by the TG 15 during a blanking interval so as to prevent a frequency dividing noise signal generated in the TG 15 from overlapping with the image signal. However, Japanese Laid-Open Patent Publication No. 9-233393 does not disclose an influence of a noise of a CCD output signal and a DSP output signal read from a MOS-type image sensor by transfer signals 01-Om of a horizontal shift register.

### SUMMARY OF THE INVENTION

According to one aspect of the present invention, there is provided a solid-state image sensing apparatus comprising a signal processing section for performing signal processing on an image signal output from a solid-state image sensing device for performing photoelectric conversion of incident light, wherein the signal processing section includes: a temporary storage section for temporarily storing the image signal; and a transmission timing adjusting section for performing the output control of a transmission timing control signal and providing the transmission timing control signal to the temporary storage section such that the image signal stored in the temporary storage section is output within a period other than an image data interval of the image signal output from the solid-state image sensing device.

In one embodiment of the present invention, the transmission timing adjusting section may further include a synchronizing signal adjusting section for performing output adjustment of a predetermined synchronizing signal to extend the period other than the image data interval such that the image signal stored in the temporary storage section can be output within the period other than the image data interval when the length of the period other than the image data interval is shorter than the length of the image data interval of the image signal.

According to another aspect of the present invention, there is provided a solid-state image sensing apparatus comprising a signal processing section for performing signal processing on an image signal output from a solid-state image sensing device for performing photoelectric conversion of incident light, wherein the signal processing section includes: a vertical signal storage section for temporarily storing one frame of the image signal; and a vertical synchronizing signal adjusting section for performing the output control of a vertical synchronizing signal and providing the vertical synchronizing signal to the vertical signal storage section such that the image signal stored in the vertical signal storage section is output within a vertical blanking interval other than an image data interval of the image signal output from the solid-state image sensing device.

In one embodiment of the present invention, the vertical synchronizing signal adjusting section may be formed to perform output adjustment of a vertical synchronizing signal to extend the vertical blanking interval such that the image signal stored in the vertical signal storage section can be output within the vertical blanking interval when the length of the vertical blanking interval other than the image data interval is shorter than the length of the image data interval.

According to still another aspect of the present invention, there is provided a solid-state image sensing apparatus comprising a signal processing section for performing signal processing on an image signal output from a solid-state image sensing device for performing photoelectric conversion of incident light, wherein the signal processing section includes: a horizontal signal storage section for temporarily storing one line of the image signal; and a horizontal synchronizing signal adjusting section for performing the output control of a horizontal synchronizing signal and providing the horizontal synchronizing signal to the horizontal signal storage section such that the image signal stored in the horizontal signal storage section is output within a horizontal blanking interval other than an image data interval of the image signal output from the solid-state image sensing device.

In one embodiment of the present invention, the horizontal synchronizing signal adjusting section may be formed to perform output adjustment of a horizontal synchronizing signal to extend the horizontal blanking interval such that the image signal stored in the horizontal signal storage section can be output within the horizontal blanking interval when the length of the horizontal blanking interval other than the image data interval is shorter than the length of the image data interval.

In one embodiment of the present invention, a solid-state image sensing apparatus may further comprises a transmission speed adjusting section for adjusting a transmission speed of the image signal stored in the temporary storage section such that the image signal stored in the temporary storage section is output within the period other than the image data interval when the length of the period other than the image data interval is shorter than the length of the image data interval.

In one embodiment of the present invention, a solid-state image sensing apparatus may further comprises an image signal compression section for compressing the image signal stored in the temporary storage section such that the image signal stored in the temporary storage section is output within the period other than the image data interval when the length of the period other than the image data interval is shorter than the length of the image data interval.

In one embodiment of the present invention, a solid-state image sensing apparatus may further comprise an image output section to which the image signal stored in the storage section is transmitted.

In one embodiment of the present invention, the signal processing section may further include an image signal output section for outputting the image signal after signal processing.

In view of the above-described structure, the functions of the present invention will be described below.

According to the present invention, in a solid-state image sensing apparatus including a solid-state image sensing device such as a CCD, and signal processing means such as DSP, the signal processing means includes temporary storage means for temporarily storing a preferable amount of an image signal which is subjected to signal processing in the signal processing means, and transmission timing adjusting means for performing output adjustment of a transmission timing control signal (timing pulse) of the image signal.

For transmitting the image signal after signal processing to image output means such as display means, a printer, or the like, output adjustment of the transmission timing control signal is performed by the transmission timing adjusting means, and the transmission timing control signal is provided to the temporary storage means within the blanking interval, i.e., a period other than image interval in the solid-state image sensing device (image data interval). The image signal stored in the temporary storage means is output to the image output means in synchronization with the transmission timing control signal.

Accordingly, it is possible to prevent image data the image data of the image signal output from the solid-state image sensing device, and the image data of the image signal output from the signal processing means from overlapping each other when they are output, as they do in the conventional art. A noise generated in the image signal transmitted through the signal processing means from the solid-state image sensing device may be reduced.

Further, in the present invention, a vertical signal storage means for temporarily storing one frame of the image signal which has been subjected to signal processing in the signal processing means, vertical synchronizing signal adjusting means forperformingoutput control of the vertical synchronizing signal in accordance with the length of the output interval of the image data of the image signal and the length of the vertical blanking interval.

For transmitting the image signal which has been subjected to signal processing to image output means such as display means, a printer, or the like, output adjustment of the vertical synchronizing signal is performed by the vertical synchronizing signal adjusting means, and the length of the period other than the image interval of the solid-state image sensing device (image data interval) (vertical blanking interval) is made equal to or longer than the length of the output interval of the output interval of the image signal output from the signal processing means (image data interval). Further, the vertical synchronizing signal adjusted by the vertical synchronizing signal adjusting means is provided to the vertical signal storage means, and the image signal stored in the vertical signal storage means is transmitted to the image output means in synchronization with the vertical synchronizing signal.

Accordingly, it is possible to prevent the image data of the image signal output from the solid-state image sensing device and image data of the image signal output from the signal processing means from overlapping each other when they are output, as they do in the conventional art. It becomes possible to reduce a noise generated in the image signal transmitted through the signal processing means from the solid-state image sensing device. Even in the case where the output interval of the image signal output from the signal processing means is longer than the vertical blanking interval of the image signal output from the solid-state image sensing device, and the image data of the image signal output from the solid-state image sensing device and the image data of the image signal output from the signal processing means overlap each other in view of time when they are output thereby causing a noise to be generated, it becomes possible to transmit the image signal from the signal processing means within the vertical blanking interval by lengthening the vertical blanking interval.

Further, in the present invention, a horizontal signal storage means for temporarily storing one line of the image signal which has been subjected to signal processing in the signal processing means, horizontal synchronizing signal adjusting means for performing output control of the horizontal synchronizing signal in accordance with the length of the output interval of the image data of the image signal and the length of the horizontal blanking interval.

For transmitting the image signal which has been subjected to signal processing to image output means such as display means, a printer, or the like, output adjustment of the horizontal synchronizing signal is performed by the horizontal synchronizing signal adjusting means such that the length of the period other than the image interval of the solid-state image sensing device output signal (image data interval) (vertical blanking interval) is longer than the output interval of the signal processing means output signal (image data interval). The horizontal synchronizing signal subjected to output adjustment by the horizontal synchronizing signal adjusting means is provided to the horizontal signal storage means, and the image signal stored in the horizontal signal storage means is transmitted to the image output means in synchronization with the vertical synchronizing signal.

Accordingly, it is possible to prevent the image data interval of the image signal output from the solid-state image sensing device and the image data interval of the image signal output from the signal processing means from overlapping each other when they are output, as they do in the conventional art. It becomes possible to reduce a noise of the image signal transmitted through the signal processing means from the solid-state image sensing device, which is generated due to transmission of the image signal. Even in the case where the output interval of the signal processing means output signal (image signal) (image data interval) is longer than the horizontal blanking interval of the solid-state image sensing device output signal (image signal), and the image data interval of the solid-state image sensing device output signal (image signal) and the image data interval of the signal processing means output signal (image data) overlap each other in view of time when they are output thereby causing a noise to be generated, it becomes possible to transmit (output) the image signal from the signal processing means within the horizontal blanking interval by lengthening the horizontal blanking interval. Furthermore, a circuit scale of the solid-state image sensing apparatus can be made smaller since the horizontal signal storage section has a smaller storage capacity compared to the vertical signal storage section.

By providing transmission speed adjusting means for adjusting the transmission speed (frequency) of the image signal stored in the temporary storage means, it becomes possible to transmit the image signal from the temporary storage means at a preferable transmission speed (frequency) in a period other than the image interval in the solid-state image sensing device output signal (image data interval). Thus, the above-described adjustment of the length of the blanking interval is not necessary any more, and it is also possible to further shorten the blanking interval.

By providing image signal compression means for compressing the image signal stored in the temporary storage means, it becomes possible to compress the image signal to a preferable size and output from the temporary storage means in a period other than the image interval in the solid-state image sensing device output signal (image data interval). Thus, the above-described adjustment of the blanking interval is not necessary any more, and it is also possible to further shorten the blanking interval.

As described above, according to the present invention, by providing the transmission timing adjusting means for the image signal, and the temporary storage means image signal for the signal processing means, the transmission timing of the image signal can be adjusted, and the image signal can be transmitted from the temporary storage means to outside within the blanking interval of the solid-state image sensing device. This enables to reduce a noise of the image signal transmitted through the signal processing means from the solid-state image sensing device, which is generated by transmitting the image signal, and to obtain an image of better image quality.

Further, by providing the vertical synchronizing signal adjusting means and the vertical signal storage means in the signal processing means, the length of the vertical blanking interval of the solid-state image sensing device can be adjusted (controlled), and the image signal can be transmitted within the vertical blanking interval of the solid-state image sensing device. This enables to reduce a noise of the image signal transmitted through the signal processing means from the solid-state image sensing device, which is generated by transmitting the image signal, and to obtain an image of better image quality.

Further, by providing the horizontal synchronizing signal adjusting means and the horizontal signal storage means in the signal processing means, the length of the horizontal blanking interval of the solid-state image sensing device can be adjusted (controlled), and the image signal can be transmitted within the horizontal blanking interval of the solid-state image sensing device. This enables to reduce a noise of the image signal transmitted through the signal processing means from the solid-state image sensing device, which is generated by transmitting the image signal, and to obtain an image of better image quality.

Further, by providing transmission speed adjusting means in the signal processing means, the transmission speed (frequency) of the image signal can be adjusted so that the image signal is transmitted within the blanking interval of the solid-state image sensing device even though the blanking interval of the solid-state image sensing device is short.

Further, by providing image signal compression means in the signal processing means, the image signal can be compressed so that the image signal is transmitted within the blanking interval of the solid-state image sensing device even though the blanking interval of the solid-state image sensing device is short.

Thus, the invention described herein makes possible the advantage of providing a solid-state image sensing apparatus in which a noise generated when an image signal is transmitted is reduced to obtain an image having good quality.

These and other advantages of the present invention will become apparent to those skilled in the art upon reading and understanding the following detailed description with reference to the accompanying figures.

### BRIEF DESCRIPTION OF THE DRAWINGS

Figure 1 is a block diagram showing the structure of a solid-state image sensing apparatus according to Embodiment 1 of the present invention.
Figure 2 is a signal waveform diagram showing examples of signals, respectively by (a) through (d), which are output from the respective sections of the solid-state image sensing apparatus of Figure 1.
Figure 3 is a signal waveform diagram illustrating a problem of the solid-state image sensing apparatus of Figure 1, respectively by (a) through (c).
Figure 4 is a block diagram indicating the structure of a solid-state image sensing apparatus according to Embodiment 2 of the present invention.
Figure 5 is a signal waveform diagram showing examples of signals, respectively by (a) through (c), which are output from the respective sections of the solid-state image sensing apparatus of Figure 4.
Figure 6 is a block diagram indicating the structure of a solid-state image sensing apparatus according to Embodiment 3 of the present invention.
Figure 7 is a signal waveform diagram showing examples of signals, respectively by (a) through (c), which are output from the respective sections of the solid-state image sensing apparatus of Figure 6.
Figure 8 is a block diagram indicating the structure of a solid-state image sensing apparatus according to Embodiment 4 of the present invention.
Figure 9 is a signal waveform diagram showing examples of signals, respectively by (a) through (c), which are output from the respective sections of the solid-state image sensing apparatus of Figure 8.
Figure 10 is a block diagram indicating the structure of a solid-state image sensing apparatus according to Embodiment 5 of the present invention.
Figure 11 is a signal waveform diagram showing examples of signals, respectively by (a) through (c), which are output from the respective sections of the solid-state image sensing apparatus of Figure 10.
Figure 12 is a block diagram indicating the structure of a conventional solid-state image sensing apparatus.
Figure 13 is a signal waveform diagram showing examples of signals, respectively by (a) through (d), which are output from the respective sections of the solid-state image sensing apparatus of Figure 12.

### DESCRIPTION OF THE PREFERRED EMBODIMENTS

Hereinafter, Embodiments 1 through 5 of a solid-state image sensing apparatus according to the present invention will be described in detail with reference to the drawings. In the embodiments, generation of a noise is prevented by adjusting transmission timing such that an image signal (CCD output signal) transmitted from a solid-state image sensing device (CCD) and an image signal (DSP output signal) transmitted from signal processing means (DSP) after signal processing do not affect each other.

### (Embodiment 1)

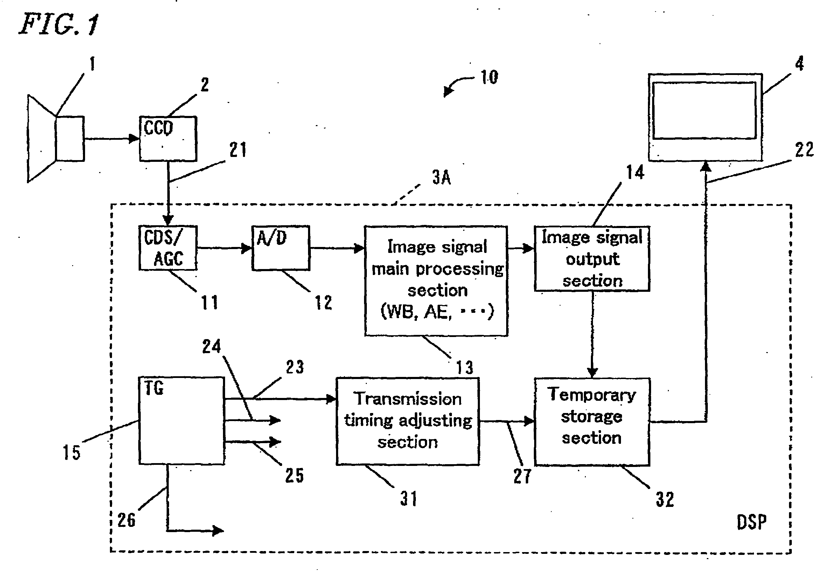

Figure 1 is a block diagram showing the structure of a solid-state image sensing apparatus according to Embodiment 1 of the present Invention. Components which have the same function as those in the conventional solid-state image sensing apparatus shown in Figure 12 are denoted by the same reference numerals and the descriptions thereof are omitted.

As shown in Figure 1, in addition to the components of the conventional solid-state image sensing apparatus shown in Figure 12, a solid-state image sensing apparatus 10 further includes: a transmission timing adjusting section 31 as transmission timing adjusting means which receives a timing pulse 23 as an input from a TG 15 as timing generation means; and an temporary storage section 32 as temporary storage means which is connected to an output terminal thereof and also to an output terminal of an image signal output section 14. The transmission timing adjusting section 31 and the temporary storage section 32 are in a DSP 3A as signal processing means for performing signal processing of an image signal output from a solid-state image sensing device (CCD 2) which performs photoelectric conversion of incident light.

The transmission timing adjusting section 31 adjusts an output of the timing pulse 23 as a transmission timing control signal provided from the TG 15. Then, the transmission timing adjusted pulse 27 as the transmission timing control signal is provided to the temporary storage section 32. The timing to output the transmission timing adjusted pulse 27 for synchronizing the output of the temporary storage section 32 such that outputting the image signal from the temporary storage section 32 is completed within a blanking interval (including both a horizontal blanking interval when a horizontal synchronizing signal is fed back and a vertical blanking interval when a vertical synchronizing signal is fed back), i.e., a period other than a video interval of a CCD output signal (image signal output from the CCD 2) (a period other than image data interval of an image signal).

The temporary storage section 32 temporarily stores an image signal having a predetermined amount of data subjected to various signal processing in an image signal pre-processing section 11, an A/D conversion section 12 and image signal main processing section 13 and transmitted from the image signal output section 14. The stored image signal is output to image output means such as a display section 4 (or a printer) as a DSP output signal 22 in synchronization with the transmission timing adjusted pulse 27 provided from the transmission timing adjusting section 31.

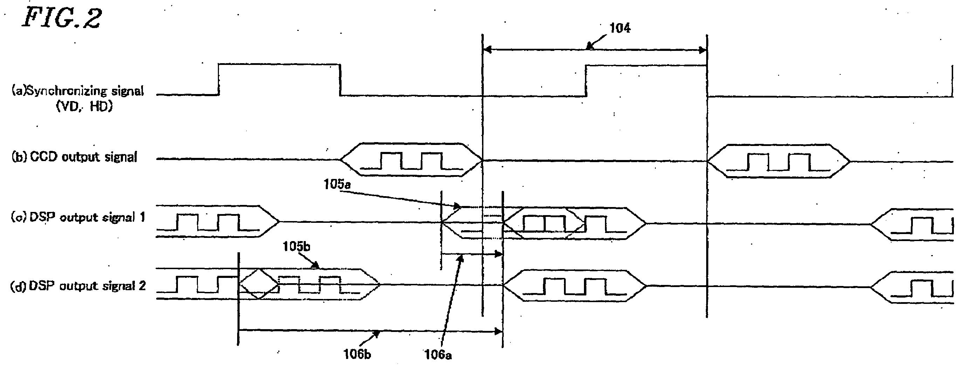

Figure 2 is a signal waveform diagram showing examples of signals output from the respective sections of the solid-state image sensing apparatus 10 of Figure 1. In Figure 2, output of the DSP output signal is slightly shifted (delayed) from the start of the blanking interval 104. However, the DSP output signal may be output at the start of the blanking interval 104.

In Figure 2, (a) indicates a synchronizing signal(vertical synchronizing signal VD and horizontal synchronizing signal HD) of the CCD output signal 21. Similar to (b) in Figure 13, (b) in Figure 2 the CCD output signal 21. In Figure 2, (c) and (d) respectively indicate DSP output signals 1 and 2 similar to those indicated by (c) and (d) in Figure 13, which have transmission timing adjusted by the transmission timing adjusting section 31 and the temporary storage section 32.

As indicated by (c) and (d) in Figure 2, transmission timings of the DSP output signal105a and 105b indicated by dotted lines are adjusted (delayed) by time 106a and 106b by the transmission timing adjusting section 31 and the temporary storage section 32 within the blanking interval 104.

Therefore, it is possible to prevent an image data portion of the CCD output signal 21 and an image data portion of the DSP output signal 22 from overlapping each other when they are output, as they do in the conventional art. This enables to reduce a noise of the image signal transmitted through the DSP 3A from the solid-state image sensing device (CCD2), which is generated by transmission of the image signal, and to display an image having a high image quality on a display screen of the display section 4.

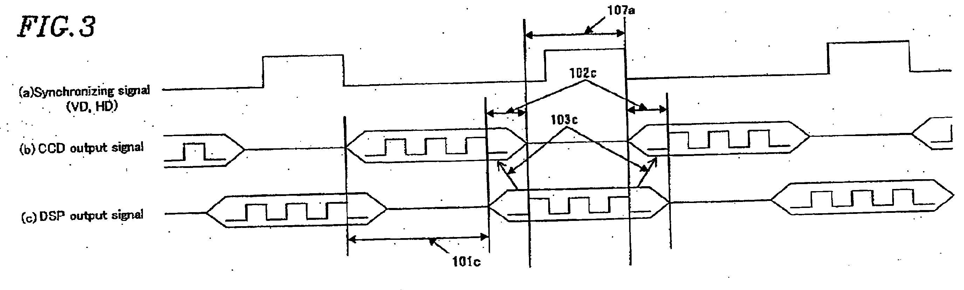

Next, a problem of the solid-state image sensing apparatus 10 according to Embodiment 1 will be described with reference to Figure 3.

In Figure 3, (a) indicates a synchronizing signal (vertical synchronizing signal VD and horizontal synchronizing signal HD) of the CCD output signal 21; (b) indicates the CCD output signal 21; (c) indicates the DSP output signal. In (c), interval 101c indicates a time required for signal processing in the DSP 3A.

As indicated by (b) and (c) in Figure 3, when a blanking interval 107a of the CCD output signal is shorter than an output interval of the DSP output signal, image data of the CCD output signal and image data of the DSP output signal are overlapping each other when they are output, as an interval 102c of (b) shown in Figure 3. In such a case, as indicated by an arrow 103c in Figure 3, the image signal is affected by the DSP output signal and a noise is generated. Due to an influence of such a noise, there is a problem that the image quality is deteriorated.

Therefore, with respect to Embodiments 2 and 3 below, a method for transmitting the DSP output signal within the blanking interval of the solid-state image sensing device (CCD 2) by adjusting (controlling) the length of the blanking interval will be described. With respect to Embodiments 4 and' 5 below, a method for transmitting the DSP output signal 22 within the blanking interval of the solid-state image sensing device (CCD 2) by adjusting the length of the DSP output signal 22 will be described.

### (Embodiment 2)

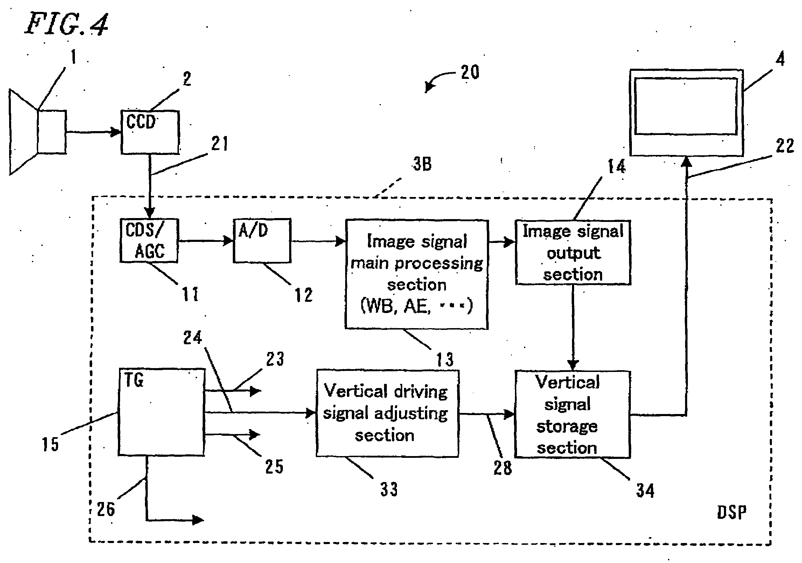

Figure 4 is a block diagram indicating the structure of a solid-state image sensing apparatus according to Embodiment 2 of the present invention. Components which have the same function as those in the solid-state image sensing apparatus shown in Figure 12 are denoted by the same reference numerals and the descriptions thereof are omitted.

In Figure 4, in addition to the components of the solid-state image sensing apparatus shown in Figure 12, a solid-state image sensing apparatus 20 further includes: a vertical synchronizing signal adjusting section 33 as vertical synchronizing signal adjusting means which receives a vertical synchronizing signal(VD) 24 from a TG 15; and a vertical signal storage section 34 as temporary storage means connected to an output terminal thereof and an output terminal of an image signal output section 14. The vertical synchronizing signal adjusting section 33 and the vertical signal storage section 34 are in a DSP 3B as signal processing means for performing signal processing on the image signal output from the solid-state image sensing device (CCD 2) for performing photoelectric conversion of incident light.

The vertical synchronizing signal adjusting section 33 adjusts a High level interval and a Low level interval of the vertical synchronizing signal (VD) 24 provided from the TG 15 to the preferable lengths. Then, the vertical synchronizing signal adjusting section 33 provides an adjusted vertical synchronizing signal(CVD) 28 to the vertical signal storage section 34. The vertical synchronizing signal 28 is adjusted (variably controlled) to have a long vertical blanking interval such that the image signal can be output from the vertical signal storage section 34 within the vertical blanking interval, i.e., a period other than the video interval of the CCD output signal 21 in accordance with the length of the image data in the image signal and the length of the blanking interval. Specifically, the vertical synchronizing signal adjusting section 33 may include a calculation processing section (not shown) for calculating the length of time to lengthen the blanking interval when the length of the image data is longer than that of the blanking interval in order to conform to the length, and a synchronizing signal control section (not shown) for controlling the High level interval of the vertical synchronizing signal based on the calculated results.

The vertical signal storage section 34 temporarily stores one frame of the image signal which is subjected to signal processing in the image signal pre-processing section 11, the A/D conversion section 12 and the image signal main processing section 13 and transmitted from the image signal output section 14. The stored image signal is output to display section 4 as the DSP output signal 22 in synchronization with the adjusted vertical synchronizing signal 28 provided from the vertical synchronizing signal adjusting section 33.

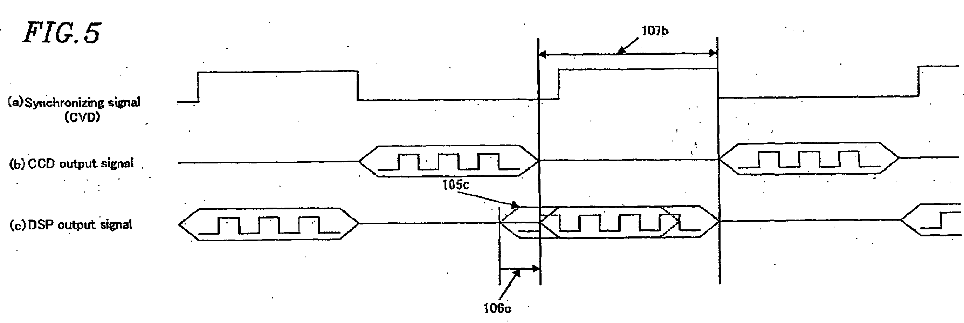

Figure 5 is a signal waveform diagram showing examples of signals output from the respective sections of the solid-state image sensing apparatus shown in Figure 4.

In Figure 5, (a) indicates an adjusted vertical synchronizing signal CVD, which is a vertical synchronizing signal VD of the CCD output signal 21 similar to that indicated by (a) in Figure 3 adjusted by the vertical synchronizing signal adjusting section 33 so as to have a longer High level interval; (b) indicates a CCD output signal 21 similar to (b) in Figure 3; and (c) indicates a DSP output signal similar to that indicated by (c) in Figure 3, but the transmission timing is adjusted (controlled) by the vertical synchronizing signal adjusting section 33 and the vertical signal storage section 34.

As indicated by (a) in Figure 5, since the High level interval of the adjusted vertical synchronizing signal CVD is adjusted to be longer by the vertical synchronizing signal adjusting section 33, a blanking interval 107b is adjusted (the setting is controlled) to be long. As indicated by (c) in Figure 5, transmission timing of the DSP output signal 105c indicated by dotted line is adjusted (delayed) by time 106c by the vertical synchronizing signal adjusting section 33 and the vertical signal storage section 34, and the DSP output signal is output within the blanking interval 107b.

Accordingly, even when the output interval of the DSP output signal 22 is shorter than the vertical blanking interval of the solid-state image sensing device (CCD 2), vertical blanking interval can be adjusted (variably controlled) to a preferable length (the length including the output interval of the DSP output signal 22) so that the image signal (DSP output signal 22) can be transmitted from the DSP within the vertical blanking interval. Thus, it becomes possible to prevent the image data of the CCD output signal 21 and image data of the DSP output signal 22 from overlapping each other in view of time when they are output. This enable to reduce a noise of the image signal transmitted through the DSP 3B from the solid-state image sensing device (CCD 2), which is generated by transmitting the image signal, and to display an image having a high image quality on the display screen of the display section 4.

### (Embodiment 3)

In Embodiment 2, the vertical blanking interval is variably controlled. In Embodiment 3, the horizontal blanking interval is variably controlled.

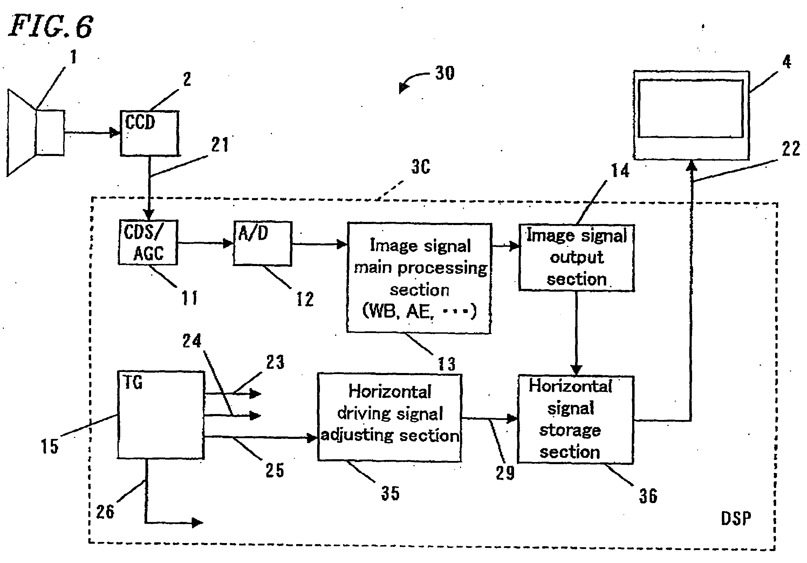

Figure 6 is a block diagram showing the structure of a solid-state image sensing apparatus according to Embodiment 3 of the present invention. Components which have the same function as those in the solid-state image sensing apparatus shown in Figure 12 are denoted by the same reference numerals and the descriptions thereof are omitted.

In Figure 6, in addition to the components of the conventional solid-state image sensing apparatus shown in.Figure 12, the solid-state image sensing apparatus 30 further includes: a horizontal synchronizing signal adjusting section 35 as horizontal synchronizing signal adjusting means which receives a horizontal synchronizing signal (HD) 25 from the TG 15 as an input; and a horizontal signal storage section 36 as temporary storage means connected to an output terminal thereof and also connected to an output terminal of the image signal output section 14. The horizontal synchronizing signal adjusting section 35 and the horizontal signal storage section 36 are in a DSP 3C as signal processing means for performing signal processing on an image signal output from the solid-state image sensing device (CCD 2) for performing photoelectric conversion of incident light.

The horizontal synchronizing signal adjusting section 35 adjusts the High level interval and the Low level interval of the horizontal synchronizing signal (HD) 25 provided from the TG 15 to preferable lengths. The horizontal synchronizing signal adjusting section 35 provides the adjusted horizontal synchronizing signal (CHD) 29 to the horizontal signal storage section 36. The horizontal synchronizing signal 29 is adjusted (variably controlled) so as to have a long horizontal blanking interval such that the image signal can be output from the horizontal signal storage section 36 within the horizontal blanking interval, i.e., a period other than the video interval of the CCD output signal 21, in accordance with the length of the image data in the image signal and the length of the blanking interval. Specifically, the horizontal synchronizing signal adjusting section 35 may include, for example, a calculation processing section (not shown) for calculating a time to lengthen the blanking interval when the length of the image data is longer than that of the blanking interval in order to conform to the length, and a synchronizing signal control section (not shown) for controlling the High level interval of the horizontal synchronizing signal based on the calculated results.

The horizontal signal storage section 36 temporarily stores one line of the image signal subjected to signal processing in the image signal pre-processing section 11, the A/D conversion section 12, and the image signal main processing section 13 and transmitted from the image signal output section 14. The stored image signal is output to the display section 4 as the DSP output signal 22 in synchronization with the adjusted horizontal synchronizing signal 29 provided from the horizontal synchronizing signal adjusting section 35.

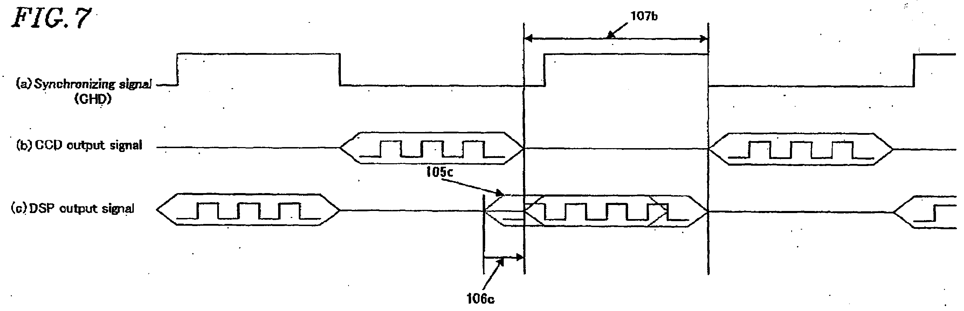

Figure 7 is a waveform diagram showing examples of signals output from respective sections of the solid-state image sensing apparatus 30 of Figure 6.

In Figure 7, (a) indicates an adjusted horizontal synchronizing signal CHD, which is a horizontal synchronizing signal HD of the CCD output signal 21 similar to that indicated by (a) in Figure 3 adjusted to have a long High level interval by the horizontal synchronizing signal adjusting section 35; (b) indicates a CCD output signal 21 similar to that indicated by (b) in Figure 3; (c) indicates the DSP output signal 22 similar to that indicated by (c) in Figure 3 having the transmission timing adjusted by the horizontal synchronizing signal adjusting section 35 and the horizontal signal storage section 36.

As indicated by (a) in Figure 7, the blanking interval 107b is adjusted (variably controlled) by adjusting the High level interval of the adjusted horizontal synchronizing signal CHD to be long by the horizontal synchronizing signal adjusting section 35. As indicated by (c) in Figure 7, transmission timing of a DSP output signal 105c indicated by dotted lines is adjusted (delay-controlled) by the time 106c by the horizontal synchronizing signal adjusting section 35 and the horizontal signal storage section 36, and the DSP output signal 22 is output so as to fit within the blanking interval 107b.

Accordingly, even when the output interval of the DSP output signal 22 is longer than the horizontal blanking interval of the solid-state image sensing device (CCD 2), the horizontal blanking interval can be adjusted (variably controlled) to a preferable length (interval including an output interval including the DSP output signal 22) so that image signal can be transmitted from the DSP 3C within the horizontal blanking interval. Thus, it becomes possible to prevent the image data of the CCD output signal 21 and image data of the DSP output signal 22 from overlapping each other in view of time when they are output, as they do in the conventional art. This enable to reduce a noise of the image signal transmitted through the DSP 3C from the solid-state image sensing device (CCD 2), which is generated by transmitting the image signal, and to display an image having a high image quality on the display screen of the display section 4 for displaying the output image. Furthermore, a circuit scale of the solid-state image sensing apparatus can be made smaller since the horizontal signal storage section 36 has a smaller storage capacity compared to the vertical signal storage section 34 used in Embodiment 2.

### (Embodiment4)

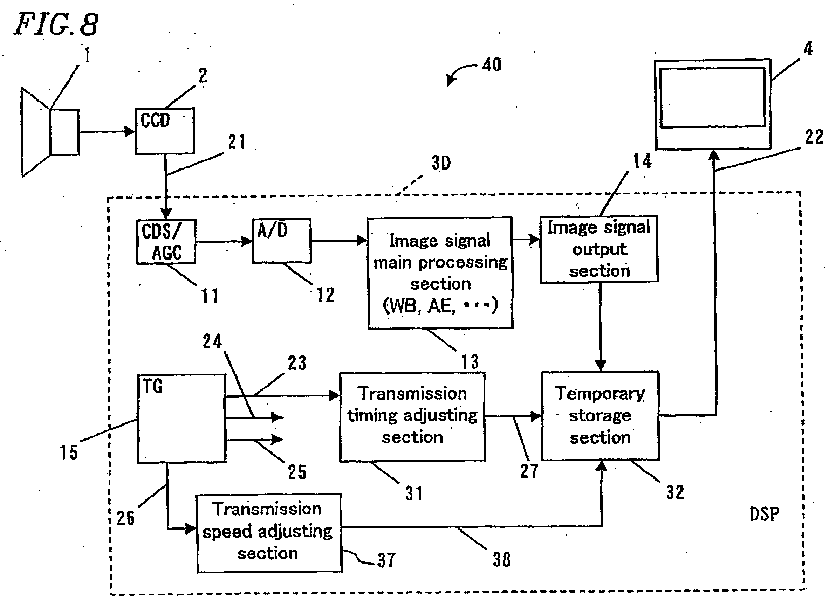

Figure 8 is a block diagram showing the structure of the solid-state image sensing apparatus according to Embodiment 4 of the present invention. Components which have the same function as those in the solid-state image sensing apparatus shown in Figure 1 are denoted by the same reference numerals and the descriptions thereof are omitted.

In Figure 8, in addition to the components of the solid-state image sensing apparatus 10 shown in Figure 1, a solid-state image sensing apparatus 40 further includes a transmission speed adjusting section 37 as a transmission speed adjustment means which receives a clock pulse 26 from the TG 15 as an input, and outputs a signal after the speed transmission adjustment (frequency variable controlled) to the temporary storage section 32. The transmission speed adjusting section 37 is in the signal processing means for performing signal processing on the image signal output from the solid-state image sensing device (CCD 2) for photoelectric converting incident light.

The transmission adjusting section 37 adjusts the clock pulse 26 provided from the TG 15 to a preferable frequency. The transmission adjusting section 37 provides a transmission speed adjusted pulse 38 to the temporary storage section 32. The frequency of the transmission speed adjusted pulse 38 is adjusted (variably controlled such that the image signal can be output from the temporary storage section 32 within the blanking interval (including both horizontal blanking interval when a horizontal synchronizing signal is fed back and vertical blanking interval when a vertical synchronizing signal is fed back), i.e., a period other than the video interval of the CCD output signal 21 in accordance with the length of the image data in the image signal and the length of the blanking interval. Specifically, the transmission speed adjusting section 37 may include, for example, a calculation processing section (not shown) for calculating a frequency corresponding to time by which the length of the image data is shortened so as to conform to the blanking interval when the length of image data is longer than that of the blanking interval, and a frequency control section (not shown) for variably controlling the frequency of the clock pulse 26 in accordance with the calculated results.

The temporary storage section 32 temporarily stores a predetermined data amount of the image signal which is subjected to signal processing in the image signal pre-processing section 11, A/D conversion section 12 and image signal main processing section 13 and transmitted from the image signal output section 14. The stored image signal is adjusted to have a preferable speed and output as the DSP output signal 22 to the display section 4 in synchronization with the transmission timing adjusted pulse 27 provided from the transmission timing adjusting section 31, and the transmission speed adjusted pulse 38 transmitted from the transmission speed adjusting section 37.

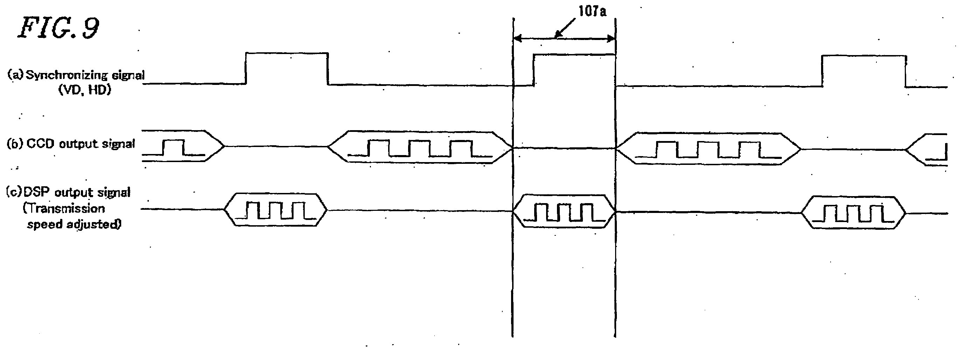

Figure 9 is a signal waveform diagram showing examples of the signals output from the respective sections of the solid-state image sensing apparatus of Figure 8.

In Figure 9, (a) indicates a synchronizing signal (horizontal synchronizing signal HD, vertical synchronizing signal VD) of the CCD output signal 21 similar to that indicated by (a) in Figure 3; (b) indicates the CCD output signal 21 similar to that indicated by (b) in Figure 3; and (c) indicates the DSP output signal 22 similar to that indicated by (c) in Figure 3, which has transmission timing and transmission speed adjusted by the transmission timing adjusting section 31, the temporary storage section 32, and the transmission speed adjusting section 37.

As indicated by (c) in Figure 9, the transmission timing and transmission speed (frequency) of the DSP output signal 22 is adjusted (variably controlled) by the temporary storage section 32, the transmission timing adjusting section 31, and the transmission speed adjusting section 37, and the output interval of the DSP output signal 22 is shortened such that the DSP output signal 22 is output within the blanking interval 107a.

Accordingly, even when the output interval of the DSP output signal 22 is longer than the blanking interval of the solid-state image sensing device (CCD 2), the output interval of the DSP output signal 22 can be adjusted to a preferable length (output interval shortening control) by adjusting (variably controlling to have higher) transmission speed (frequency) so that the image signal can be transmitted from the DSP 3D within the blanking interval. Thus, it is possible to prevent the image data of the CCD output signal 21, and the image data of the DSP output signal 22 from overlapping each other when they are output, as they do in the conventional art. This enables to reduce a noise of the image signal transmitted through the DSP 3D from the solid-state image sensing device (CCD 2), which is generated by transmitting the image signal, and to display a high-quality image on the display screen of the display section 4. Further, adjustment of the blanking interval as in Embodiments 2 and 3 is not necessary any more, and the blanking interval may be set to be short.

### (Embodiment 5)

In Embodiment 4 described above, the frequency of the DSP output signal 22 is increased to shorten the output interval thereof for fitting the output interval of the DSP output signal 22 within the blanking interval. In Embodiment 5, signal compression of the DSP output signal 22 is performed for fitting the output interval of the DSP output signal 22 within the blanking interval.

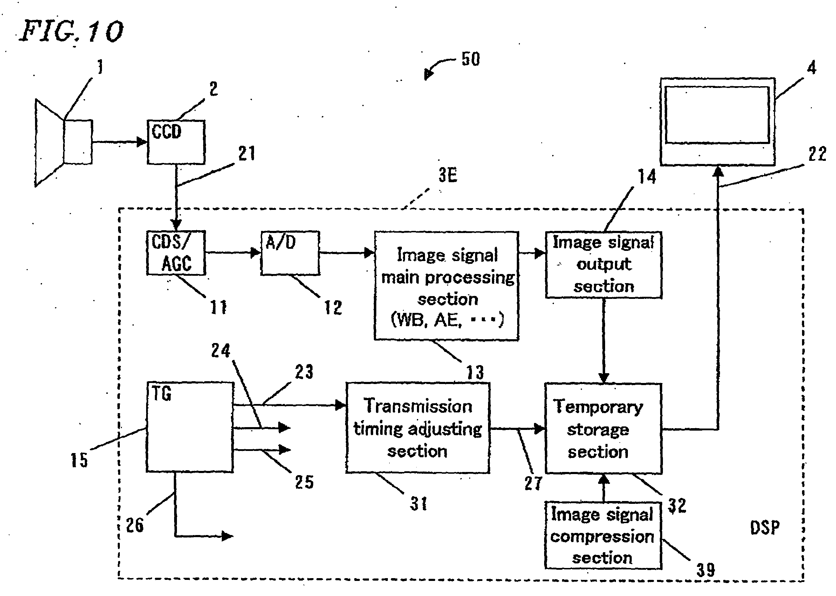

Figure 10 is a block diagram showing the structure of the solid-state image sensing apparatus according to Embodiment 5 of the present invention. Components which have the same function as those in the solid-state image sensing apparatus shown in Figure 1 are denoted by the same reference numerals and the descriptions thereof are omitted.

In Figure 10, in addition to the components of the solid-state image sensing apparatus 10 shown in Figure 1, a solid-state image sensing apparatus 50 further includes an image signal compression section 39 as image signal compression means in a DSP 3E as signal processing means for performing signal processing on the.image signal output from the solid-state image sensing device (CCD 2) for performing photoelectric conversion of incident light.

The image signal compression section 39 compresses the image signal stored in the temporary storage section 32. The amount of data of the image signal is adjusted such that the image signal can be output from the temporary storage section 32 within the blanking interval (including both the horizontal blanking interval when the horizontal synchronizing signal is fed back and the vertical blanking interval when the vertical synchronizing signal is fed back), i.e., a period other than the video interval of the CCD output signal 21 in accordance with the length of the image data of the image signal and the length of the blanking interval. Specifically, the image signal compression section 39 may include, for example, a calculation processing section (not shown) for calculating an amount of data compression of the image data compressed so as to conform to the blanking interval when the length of the image data is longer than the length of the blanking interval and a data compression section (not shown) for compressing the image data based on the calculated results.

The temporary storage section 32 temporarily stores a predetermined amount of data of the image signal which is subjected to signal processing by the image signal pre-processing section 11, the A/D conversion section 12, and the image signal main processing section 13, and transmitted from the image signal output section 14. The image signal processed by signal compression is output as the DSP output signal 22 to the display section 4 in synchronization with the transmission timing adjusted pulse 27 provided from the transmission timing adjusting section 31.

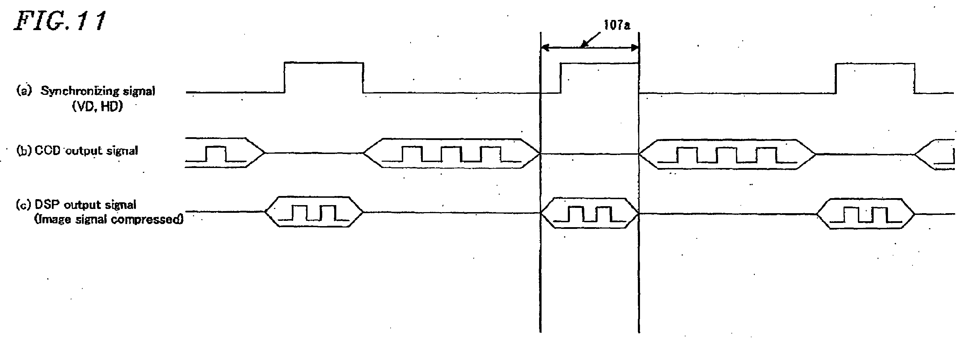

Figure 11 is a signal waveform diagram showing examples of the signals output from the respective sections of the solid-state image sensing apparatus 50 of the Figure 10.

In Figure 11, (a) indicates a synchronizing signal (horizontal synchronizing signal HD and vertical synchronizing signal VD) of the CCD output signal 21 similar to that indicated by (a) in Figure 3; (b) indicates the CCD output signal 21 similar to that indicated by (b) in Figure 3; and (c) indicates the DSP output signal similar to that indicated by (c) in Figure 3, which is the image signal compressed to a predetermined data amount (a data amount which may be fitted into the blanking interval 107a) with the transmission timing thereof adjusted, by the transmission timing adjusting section 31, the temporary storage section 32, and the image signal compression section 39.

As indicated by (c) in Figure 11, transmission timing adjusting section 31, the temporary storage section 32 and the image signal compression section 38 compresses the DSP output signal 22 to a predetermined data amount, and the transmission timing thereof is adjusted (variably controlled) . Thus, the output interval of the DSP output signal 22 is shortened as a whole, and is output so as to be fitted in the blanking interval 107a.

Accordingly, even when the output interval of the DSP output signal 22 is shorter than the blanking interval of the solid-state image sensing device (CCD 2), the data compression of the image signal is performed to adjust the data amount thereof for adjusting (variably controlling) the output interval to a preferable length so that the image signal can be transmitted from the DSP 3E within the blanking interval. Thus, it is possible to prevent the image data of the CCD output signal 21 and the image data of the DSP output signal 22 from overlapping each other in view of time when they are output, as they do in the conventional art. This enables to reduce a noise of the image signal transmitted through the DSP 3E from the solid-state image sensing device (CCD 2), which is generated by transmitting the image signal, and to display an image having a high image quality on a display screen of the display section 4. Further, adjustment of the blanking interval as in Embodiments 2 and 3 is not necessary any more, and the blanking interval may be much shorter.

In the above-described Embodiments 1 through 5, the transmission timing adjustment of the present invention is performed with respect to an image signal after signal processing. However, the present invention is not limited to this example, and the transmission timing adjustment of the present invention may be performed with respect to an image signal before signal processing or during signal processing.

In the case where the length of the blanking interval as a period other than image data is shorter than the length of the image data interval of the image signal, in Embodiment 2, the length of the vertical blanking interval is adjusted to be the length equal to or longer than that of the image data interval of the image signal so that the DSP output signal is output within the vertical blanking interval, while in Embodiment 3, the length of the horizontal blanking interval is adjusted to be the length equal to or longer than that of the image data of the image signal so that the DSP output signal is output within the horizontal blanking interval. However, the present invention is not limited to these examples, and it may be constructed such that output adjustment of the vertical blanking interval is performed so as to have the length equal to or longer than that of the image data interval of the image signal so that the DSP output signal is output within the vertical blanking interval, and output adjustment of the horizontal blanking interval is also performed so as to have the length equal to or longer than that of the image data of the image signal so that the DSP output signal is output within the horizontal blanking interval. In such a case (a case where Embodiments 2 and 3 are combined), the solid-state image sensing apparatus includes both the vertical synchronizing signal adjusting section 33 and the vertical signal storage section 34, and the horizontal synchronizing signal adjusting section 35 and the horizontal signal storage section 36, and an image signal after signal processing is provided to the vertical signal storage section 34 and horizontal signal storage section 36 from the image signal output section 14.

The transmission timing adjusting section 31 according to Embodiment 1 may include a synchronizing signal adjusting section (not shown in Figure 1) as synchronizing signal adjusting means. The synchronizing signal adjusting section has at least one of: a function of extending the vertical blanking interval so as to have the length equal to or longer than that of the image data interval of the image signal with the vertical synchronizing signal as an input; and a function to extend the horizontal blanking interval so as to have the length equal to or longer than that of the image data of the image signal with the horizontal synchronizing signal as an input. Accordingly, in Embodiment 1, even when the length of the blanking interval as a period other than the image data interval of the image signal is shorter than the length of the image data interval, output adjustment of a predetermined synchronizing signal (at least one of a vertical synchronizing signal and a horizontal synchronizing signal) can also be performed for appropriately extending the period other than the image data interval (blanking interval) such that it is possible to output the image signal stored in the temporary storage means within the period other than the image data interval (blanking interval).

Further, Embodiments 1, 4, and 5 may be combined to form the solid-state image sensing apparatus. At least two of Embodiments 2 through 5 may be combined to form the solid-state image sensing apparatus.

In the field of the solid-state image sensing apparatus used in an electronic camera such as a video camera, an electronic still camera, a camera for a mobile phone, and the like, a noise generated when an image signal imaged by solid-state image sensing device (CCD 2) is transmitted can be reduced to obtain a good image.

## Claims

1. A solid-state image sensing apparatus comprising a signal processing section (3A) for performing signal processing on an image signal output from a solid-state image sensing device (2) for performing photoelectric conversion of incident light, wherein the signal processing section includes:
a temporary storage section (32) for temporarily storing the image signal; and
a transmission timing adjusting section (31) for performing the output control of a transmission timing control signal and providing the transmission timing control signal to the temporary storage section such that the image signal stored in the temporary storage section is output within a period other than an image data interval of the image signal output from the solid-state image sensing device.

2. A solid-state image sensing apparatus according to claim 1, wherein the transmission timing adjusting section further includes a synchronizing signal adjusting section for performing output adjustment of a predetermined synchronizing signal to extend the period other than the image data interval such that the image signal stored in the temporary storage section can be output within the period other than the image data interval when the length of the period other than the image data interval is shorter than the length of the image data interval of the image signal.

3. A solid-state image sensing apparatus comprising a signal processing section (3B) for performing signal processing on an image signal output from a solid-state image sensing device for performing photoelectric conversion of incident light, wherein the signal processing section includes:
a vertical signal storage section (34) for temporarily storing one frame of the image signal; and
a vertical synchronizing signal adjusting section (33) for performing the output control of a vertical synchronizing signal and providing the vertical synchronizing signal to the vertical signal storage section such that the image signal stored in the vertical signal storage section is output within a vertical blanking interval other than an image data interval of the image signal output from the solid-state image sensing device.

4. A solid-state image sensing apparatus according to claim 3, wherein the vertical synchronizing signal adjusting section is formed to perform output adjustment of a vertical synchronizing signal to extend the vertical blanking interval such that the image signal stored in the vertical signal storage section can be output within the vertical blanking interval when the length of the vertical blanking interval other than the image data interval is shorter than the length of the image data interval.

5. A solid-state image sensing apparatus comprising a signal processing section (3C) for performing signal processing on an image signal output from a solid-state image sensing device for performing photoelectric conversion of incident light, wherein the signal processing section includes:
a horizontal signal storage section (36) for temporarily storing one line of the image signal; and
a horizontal synchronizing signal adjusting section (35) for performing the output control of a horizontal synchronizing signal and providing the horizontal synchronizing signal to the horizontal signal storage section such that the image signal stored in the horizontal signal storage section is output within a horizontal blanking interval other than an image data interval of the image signal output from the solid-state image sensing device.

6. A solid-state image sensing apparatus according to claim 5, wherein the horizontal synchronizing signal adjusting section is formed to perform output adjustment of a horizontal synchronizing signal to extend the horizontal blanking interval such that the image signal stored in the horizontal signal storage section can be output within the horizontal blanking interval when the length of the horizontal blanking interval other than the image data interval is shorter than the length of the image data interval.

7. A solid-state image sensing apparatus according to claim 1, further comprising a transmission speed adjusting section for adjusting a transmission speed of the image signal stored in the temporary storage section such that the image signal stored in the temporary storage section is output within the period other than the image data interval when the length of the period other than the image data interval is shorter than the length of the image data interval.

8. A solid-state image sensing apparatus according to claim 1, further comprising an image signal compression section (39) for compressing the image signal stored in the temporary storage section such that the image signal stored in the temporary storage section is output within the period other than the image data interval when the length of the period other than the image data interval is shorter than the length of the image data interval.

9. A solid-state image sensing apparatus according to claim 1, further comprising an image output section (14) to which the image signal stored in the storage section is transmitted.

10. A solid-state image sensing apparatus according to claim 3, further comprising an image output section (14) to which the image signal stored in the storage section is transmitted.

11. A solid-state image sensing apparatus according to claim 5, further comprising an image output section (14) to which the image signal stored in the storage section is transmitted.

12. A solid-state image sensing apparatus according to claim 1, wherein the signal processing section further includes an image signal output section for outputting the image signal after signal processing.

13. A solid-state image sensing apparatus according to claim 3, wherein the signal processing section further includes an image signal output section for outputting the image signal after signal processing.

14. A solid-state image sensing apparatus according to claim 5, wherein the signal processing section further includes an image signal output section for outputting the image signal after signal processing.

## Patentansprüche

1. Festkörperbilderfassungsvorrichtung, mit einem Signalverarbeitungsabschnitt (3A) zum Ausführen einer Signalverarbeitung an einem Bildsignal, das von einem Festkörperbilderfassungselement (2) ausgegeben wird, um eine photoelektrische Umsetzung von auftreffendem Licht auszuführen, wobei der Signalverarbeitungsabschnitt enthält:
einen temporären Speicherabechnitt (32) zum temporären Speichern des Bildsignals; und
einen Übertragungszeitverlauf-Einstellabschnitt (31) zum Ausführen der Ausgabesteuerung eines Übertragungszeitverlauf-Steuersignals und zum Bereitstellen des Übertragungszeitverlauf-Steuersignals für den temporären Speicherabschnitt, derart, dass das in dem temporären Speicherabschnitt gespeicherte Bildsignal innerhalb einer Periode ausgegeben wird, die von einem Bilddatenintervall des von dem Festkörperbilderfassungselement ausgegebenen Bildsignals verschieden ist.

2. Festkörperbilderfassungsvorrichtung nach Anspruch 1, bei der der Übertragungszeitverlauf-Einstellabschnitt ferner einen Synchronisationssignal-Einstellabschnitt enthält, um eine Ausgabeeinstellung eines vorgegebenen Synchronisationssignals auszuführen, um die von dem Bilddatenintervall verschiedene Periode so zu erweitern, dass das in dem temporären Speicherabschnitt gespeicherte Bildsignal innerhalb der von dem Bilddatenintervall verschiedenen Periode ausgegeben werden kann, wenn die Länge der von dem Bilddatenintervall verschiedenen Periode kürzer als die Länge des Bilddatenintervalls des Bildsignals ist.

3. Festkörperbilderfassungsvorrichtung, mit einem Signalverarbeitungsabschnitt (3B) zum Ausführen einer Signalverarbeitung an einem Bildsignal, das von einem Festkörperbilderfassungselement ausgegeben wird, um eine photoelektrische Umsetzung von auftreffendem Licht auszuführen, wobei der Signalverarbeitungsabschnitt enthält:
einen Vertikalsignal-Speicherabschnitt (34) zum temporären Speichern eines Rahmens des Bildsignals; und
einen Vertikalsynchronisationssignal-Einstellabschnitt (33) zum Ausführen der Ausgabesteuerung eines Vertikalsynchronisationssignals und zum Bereitstellen des Vertikalsynchronisationssignals für den Vertikalsignal-Speicherabschnitt, derart, dass das in dem Vertikalsignal-Speicherabschnitt gespeicherte Bildsignal innerhalb eines Vertikalaustastintervalls, das von dem Bilddatenintervall des von dem Festkörperbilderfassungselement ausgegebenen Bildsignals verschieden ist, ausgegeben wird.

4. Festkörperbilderfassungsvorrichtung nach Anspruch 3, bei der der Vertikalsynchronisationssignal-Einstellabschnitt so beschaffen ist, dass er eine Ausgabeeinstellung eines Vertikalsynchronisationssignals ausführt, um das Vertikalaustastintervall in ber Weise zu erweitern, dass das in dem Vertikalsignal-Speicherabschnitt gespeicherte Bildsignal innerhalb des Vertikalaustastintervalls ausgegeben werden kann, wenn die Länge des von dem Bilddatenintervall verschiedenen Vertikalaustastsignals kürzer ist als die Länge des Bilddatenintervalls.

5. Festkörperbilderfassungsvorrichtung, mit einem Signalverarbeitungsabschnitt (3C), zum Ausführen einer Signalverarbeitung an einem Bildsignal, das von einem Festkörperbilderfassungselement ausgegeben wird, um eine photoelektrische Umsetzung von auftreffendem Licht auszuführen, wobei der Signalverarbeitungsabschnitt enthält:
einen Horizontalsignal-Speicherahschnitt (36) zum temporären Speichern einer Zeile des Bildsignals; und
einen Horizontalsynchronisationssignal-Einstellabschnitt (35) zum Ausführen der Ausgabesteuerung eines Horizontalsynchronisationssignals und zum Bereitstellen des Horizontalsynchronisationssignals für den Horizontalsignal-Speicherabschnitt, derart, dass das in dem Horizontalsignal-Speicherabschnitt gespeicherte Bildsignal innerhalb eines Horizontalaustastintervalls, das von einem Bilddatenintervall des von dem Festkörperbilderfassungselement ausgegebenen Bildsignals verschieden ist, ausgegeben wird.

6. Festkörperbilderfassungsvorrichtung nach Anspruch 5, bei der der Horizontalsynchronisationssignal-Einstellabschnitt so beschaffen ist, dass er die Ausgabeeinstellung eines Horizontalsynchronisationssignals ausführt, um das Horizontalaustastintervall in der Weise zu erweitern, dass das in dem Horizontalsignal-Speicherabschnitt gespeicherte Bildsignal innerhalb des Horizontalaustastintervalls ausgegeben werden kann, wenn die Länge des von dem Bilddatenintervall verschiedenen Horizontalaustastintervalls kürzer ist als die Länge des Bilddatenintervalls.

7. Festkörper-Bilderfassungsvorrichrung nach Anspruch 1, ferner mit einem Übertragungsgeschwindigkeits-Einstellabschnitt zum Einstellen einer Übertragungsgeschwindigkeit des in dem temporären Speicherabschnitt gespeicherten. Bildsignals, derart, dass das in dem temporären Speicherabschnitt gespeicherte Bildsignal innerhalb der Periode ausgegeben wird, die kürzer ist als das Bilddatenintervall, wenn die Länge der von dem Bilddatenintervall verschiedenen Periode kürzer ist als die Länge des Bilddatenintervalls.

8. Festkörperbilderfassungsvorrichtung nach Anspruch 1, ferner mit einem Bildsignal-Kompressionsabschnitt (39) zum Komprimieren des in dem temporären Speicherabschnitt gespeicherten Bildsignals, derart, dass das in dem temporären Speicherabschnitt gespeicherte Bildsignal innerhalb der von dem Bilddatenintervall verschiedenen Periode ausgegeben wird, wenn die Länge der von dem Bilddatenintervall verschiedenen Periode kürzer ist als die Länge des Bilddatellintervalls.

9. Festkörperbilderfassungsvorrichtung nach Anspruch 1, ferner mit einem Bildausgabeabschnitt (14), an den das in dem Speicherabschnitt gespeicherte Bildsignal übertragen wird.

10. Festkörperbilderfassungsvorrichtung nach Anspruch 3, ferner mit einem Bildausgabeabschnitt (14), an den das in dem Speicherabschnitt gespeicherte Bildsignal übertragen wird.

11. Festkörperbilderfassungsvorrichtung nach Anspruch 5, ferner mit einem Bildausgabeabscbnitt (14), an den das in dem Speicherabschnitt gespeicherte Bildsignal übertragen wird.

12. Festkörperbilderfassungsvorrichtung nach Anspruch 1, bei dem der Signalverarbeitungsabschnitt ferner mit einem Bildsignal-Ausgabeabschnitt versehen ist, um das Bildsignal nach der Signalverarbeitung auszugeben.

13. Festkörperbilderfassungsvorrichtung nach Anspruch 3, bei dem der Signalverarbeitungsabschnitt ferner mit einem Bildsignalausgabeabschnitt versehen ist, um das Bildsignal nach der Signalverarbeitung auszugeben.

14. Festkörperbilderfassungsvorrichtung nach Anspruch 5, bei der der Signalverarbeitungsabschnitt ferner mit einem Bildsignalausgabeabschnitt versehen ist, um das Bildsignal nach der Signalverarbeitung auszugeben.

## Revendications

1. Capteur d'images à semi-conducteur comprenant une section de traitement du signal (3A) destiné à réaliser un traitement du signal sur une sortie du signal d'image à partir d'un dispositif de détection d'images à semi-conducteur (2) pour effectuer une conversion photoélectrique d'une lumière incidente, dans lequel la section de traitement du signal comprend :
une section de stockage temporaire (32) pour stocker temporairement le signal d'image et
une section de réglage du temps de transmission (31) pour effectuer le contrôle de sortie d'un signal de contrôle du temps de transmission et pour délivrer le signal de contrôle du temps de transmission à la section de stockage temporaire de manière à ce que le signal d'image stocké dans la section de stockage temporaire soit émis dans une période autre que l'intervalle de donnée de l'image de la sortie du signal d'image provenant du dispositif de détection d'images à semi-conducteur.

2. Capteur d'images à semi-conducteur selon la revendication 1, dans lequel la section de réglage du temps de transmission comprend en outre une section de réglage du signal de synchronisation pour effectuer le réglage de sortie d'un signal de synchronisation prédéterminé afin d'étendre la période autre que l'intervalle de données de l'image de manière à ce que le signal d'image stocké dans la section de stockage temporaire puisse être émis dans la période autre que l'intervalle de données de l'image lorsque la longueur de la période autre que l'intervalle de données de l'image est inférieure à celle de l'intervalle de données de l'image du signal d'image.

3. Capteur d'images à semi-conducteur comprenant une section de traitement du signal (38) pour réaliser un traitement du signal sur une sortie du signal d'image à partir d'un dispositif de détection d'images à semi-conducteur (2) pour effectuer une conversion photoélectrique d'une lumière incidente, dans lequel la section de traitement du signal comprend:
une section de stockage du signal vertical (34) pour stocker temporairement une trame du signal d'image; et
une section de réglage du signal vertical de synchronisation (33) pour réaliser le contrôle de sortie d'un signal vertical de synchronisation et pour délivrer le signal vertical de synchronisation à la section de stockage du signal vertical de manière à ce que le signal d'image stocké dans la section de stockage du signal vertical soit émis pendant un intervalle vertical de suppression du faisceau autre qu'un intervalle de données d'image de la sortie du signal d'image provenant du dispositif de détection d'images à semi-conducteur.

4. Capteur d'images à semi-conducteur selon la revendication 3, dans lequel la section de réglage du signal vertical de synchronisation est formée pour effectuer le réglage de sortie d'un signal vertical de synchronisation afin d'étendre l'intervalle vertical de suppression du faisceau de manière à ce que le signal d'image stocké dans la section de stockage du signal vertical puisse être émis dans l'intervalle vertical de suppression du faisceau lorsque la longueur de l'intervalle vertical de suppression du faisceau autre que l'intervalle de données d'image est inférieure à la longueur de l'intervalle de données d'image.

5. Capteur d'images à semi-conducteur comprenant une section de traitement du signal (3C) pour effectuer un traitement du signal sur une sortie du signal d'image à partir d'un dispositif de détection d'images à semi-conducteur pour effectuer une conversion photoélectrique d'une lumière incidente, dans lequel la section de traitement du signal comprend :
une section de stockage du signal horizontal (36) pour stocker temporairement une ligne du signal d'image ; et
une section de réglage du signal horizontal de synchronisation (35) pour réaliser le contrôle de sortie d'un signal horizontal de synchronisation et pour délivrer le signal horizontal de synchronisation à la section de stockage du signal horizontal de manière à ce que le signal d'image stocké dans la section de stockage du signal horizontal soit émis pendant un intervalle horizontal de suppression du faisceau autre qu'un intervalle de données d'image de la sortie du signal d'image provenant du dispositif de détection d'images à semi-conducteur.

6. Capteur d'images à semi-conducteur selon la revendication 5, dans lequel la section de réglage du signal de synchronisation horizontal est formée pour effectuer le réglage de sortie d'un signal horizontal de synchronisation afin d'étendre l'intervalle horizontal de suppression du faisceau de manière à ce que le signal d'image stocké dans la section de stockage du signal horizontal puisse être émis dans l'intervalle vertical de suppression du faisceau lorsque la longueur de l'intervalle horizontal de suppression du faisceau autre que l'intervalle de données d'image est inférieure à la longueur de l'intervalle de données d'image.

7. Capteur d'images à semi-conducteur selon la revendication 1, comprenant en outre une section de réglage de la vitesse de transmission pour régler une vitesse de transmission du signal d'image stocké dans la section de stockage temporaire de manière à ce que le signal d'image stocké dans la section de stockage temporaire soit émis dans la période autre que l'intervalle de données d'image lorsque la longueur de la période autre que l'intervalle de données d'image est inférieure à la longueur de l'intervalle de données d'image.

8. Capteur d'images à semi-conducteur selon la revendication 1 comprenant en outre une section de compression du signal d'image (39) pour compresser le signal d'image stocké dans la section de stockage temporaire de manière à ce que le signal d'image stocké dans la section de stockage temporaire soit émis dans la période autre que l'intervalle de données d'image lorsque la longueur de la période autre que l'intervalle de données d'image est inférieure à la longueur de l'intervalle de données d'image.

9. Capteur d'images à semi-conducteur selon la revendication 1, comprenant en outre une section de sortie d'image (14) à laquelle est transmis le signal d'image stocké dans la section de stockage.

10. Capteur d'images à semi-conducteur selon la revendication 3, comprenant en outre une section de sortie d'image (14) à laquelle est transmis le signal d'image stocké dans la section de stockage.

11. Capteur d'images à semi-conducteur selon la revendication 5, comprenant en outre une section de sortie d'image (14) à laquelle est transmis le signal d'image stocké dans la section de stockage.

12. Capteur d'images à semi-conducteur selon la revendication 1, dans lequel la section de traitement du signal comprend une section de sortie du signal d'image pour sortir le signal d'image après le traitement du signal.

13. Capteur d'images à semi-conducteur selon la revendication 3, dans lequel la section de traitement du signal comprend en outre une section de sortie du signal d'image pour émettre le signal d'image après le traitement du signal.

14. Capteur d'images à semi-conducteur selon la revendication 5, dans lequel la section de traitement du signal comprend en outre une section de sortie du signal d'image pour émettre le signal d'image après le traitement du signal.
